# EUROPEAN PATENT APPLICATION

(11) **EP 4 790 660 A1**
(43) Date of publication of application: **12.08.2026**
(21) Application number: 25217263.0
(22) Date of filing: 20.11.2025
(51) Int. Cl.: G06V 20/52, G01C 13/00, G01P 5/00

(54) **METHOD FOR MONITORING FLOW VELOCITY AND FLOW DIRECTION OF TIDAL FLAT COASTAL CURRENT BASED ON PHOTOVOLTAIC VIDEO IMAGES OF TIDAL FLAT**

(30) Priority: 08.02.2025 CN 202510140700
(71) Applicant: SHANGHAI INVESTIGATION, DESIGN & RESEARCH INSTITUTE CO., LTD., Shanghai 200434 (CN)
(72) Inventor: ZHENG, Yue, SHANGHAI, 200434 (CN); ZENG, Zhi, SHANGHAI, 200434 (CN); LIN, Min, SHANGHAI, 200434 (CN); CHEN, Zhijie, SHANGHAI, 200434 (CN); CHEN, Xu, SHANGHAI, 200434 (CN); SUN, Quan, SHANGHAI, 200434 (CN); LU, Jining, SHANGHAI, 200434 (CN); WU, Juhua, SHANGHAI, 200434 (CN); GUAN, Mingkai, SHANGHAI, 200434 (CN); SHI, Yuqi, SHANGHAI, 200434 (CN)
(74) Representative: Groth & Co. KB

(57) **Abstract**

The present application provides a method for monitoring a flow velocity and a flow direction of a tidal flat coastal current based on photovoltaic video images of a tidal flat. The method includes: obtaining a tidal flat video of a target area to be monitored; performing scene recognition based on the tidal flat video to obtain tidal flat seawater images; determining a number of observation lines based on the tidal flat seawater images, and setting a plurality of parallel flow velocity observation lines in a north-south direction and an east-west direction according to the number of the observation lines, respectively, where the parallel flow velocity observation lines include north-south parallel flow velocity observation lines and east-west parallel flow velocity observation lines; making the north-south parallel flow velocity observation lines intersect with the east-west parallel flow velocity observation lines to obtain flow velocity nodes; and obtaining the flow velocity and the flow direction of the tidal flat coastal current based on a north-south component and an east-west component of the flow velocity nodes. According to the present application, planar monitoring can be implemented, and interference of irrelevant areas can be avoided. Details of areas having local turbulence or significant changes can be effectively recorded. Flow velocity characteristics of different positions in a large-scale monitoring area can be fully reflected.

## Description

### TECHNICAL FIELD

The present application belongs to the technical field of monitoring flow velocities and flow directions of tidal flat coastal currents, relates to a method for monitoring a flow direction and a flow direction, and particularly relates to a method for monitoring a flow velocity and a flow direction of a tidal flat coastal current based on photovoltaic video images of a tidal flat.

### BACKGROUND

Tidal flats are a vital component of coastlines. Their ecosystems and geomorphological features are influenced by natural factors such as tides, coastal currents, and wind waves, so phenomena like erosion or siltation occur. These phenomena pose potential risks to ecological environments and safety of nearshore marine engineering. Accordingly, accurately measuring a flow velocity and a flow direction of a tidal flat surface is very important for studying sedimentation and erosion processes.

Traditional methods for coastal current observation primarily focus on nearshore deep-water areas. Typically, acoustic doppler current profilers (ADCPs) are fixed on buoys or seabed based monitoring platforms for coastal current monitoring. However, due to the large sizes, the buoys and the seabed based monitoring platforms are generally only suitable for waters with depths exceeding 5 m and cannot be deployed on tidal flats. For observation of a tidal flat coastal current, some researchers erect a wooden frame on a tidal flat surface. A compact single-point current meter is then suspended upside-down from the frame, positioning its sensor probe approximately 20 cm above the tidal flat surface. The corresponding flow velocity and flow direction of the coastal current are measured once a rising tide exceeds a submerging depth of the sensor. However, such a wooden-frame erecting method causes some damage to the tidal flat surface and is only suitable for short-term observation. Moreover, it relies on manual observation and periodic measurement, leading to low efficiency and a lack of real-time data obtaining capability.

With the rapid development of tidal flat photovoltaic (PV) industry, an increasing number of photovoltaic power stations have been constructed in tidal flats of coastal zones across China. This development is inevitably altering a natural sedimentation state of the tidal flats and may accelerate erosion or siltation around pile foundations on the tidal flats, increasing safety risks of engineering construction.

Hence, a flow velocity and a flow direction of the tidal flat coastal currents need to be monitored routinely, to find potential risks in time and take corresponding measures. The tidal flats have significant tidal fluctuations. Moreover, traditional contact-type apparatuses are ill-suited for tidal flat monitoring in intertidal environments, resulting in unreliable monitoring.

Thus, in the prior art, a traditional sea wave monitoring method causes some damage to the tidal flat surface to a certain extent and is only suitable for temporary short-term observation. Moreover, it relies on manual observation and periodic measurement, leading to low efficiency and a lack of real-time data obtaining capability. Furthermore, monitoring is unreliable due to the significant tidal fluctuations of the tidal flats.

### SUMMARY OF THE INVENTION

An objective of the present application is to provide a method for monitoring a flow velocity and a flow direction of a tidal flat coastal current based on photovoltaic video images of a tidal flat, to solve problems that in the prior art, a traditional sea wave monitoring method causes damage to a tidal flat surface to a certain extent, is only suitable for temporary short-term observation, has difficulty in obtaining real-time data, has low efficiency, and is unreliable in monitoring.

In a first aspect, the present application provides a method for monitoring a flow velocity and a flow direction of a tidal flat coastal current based on photovoltaic video images of a tidal flat. The method includes: obtaining a tidal flat video of a target area to be monitored; performing scene recognition based on the tidal flat video to obtain tidal flat seawater images; determining a number of observation lines based on the tidal flat seawater images, and setting a plurality of parallel flow velocity observation lines in a north-south direction and an east-west direction according to the number of the observation lines, respectively, where the parallel flow velocity observation lines include north-south parallel flow velocity observation lines and east-west parallel flow velocity observation lines; making the north-south parallel flow velocity observation lines intersect with the east-west parallel flow velocity observation lines to obtain flow velocity nodes; and obtaining the flow velocity and the flow direction of the tidal flat coastal current based on a north-south component and an east-west component of the flow velocity nodes.

In an implementation of the first aspect, the performing scene recognition based on the tidal flat video to obtain tidal flat seawater images includes: reading the tidal flat video frame by frame, preprocessing each frame of images of the tidal flat video, and obtaining a first tidal flat video image; obtaining tidal flat image frames based on the first tidal flat video image; labeling the tidal flat image frames to obtain a scene label of each of the tidal flat image frames, where the scene label includes any one or a combination of high tide, low tide, tidal flat exposure, and tidal flat submersion; using a convolutional neural network to construct a scene classification predicting model; and performing training based on the labeled tidal flat image frames to obtain scene types corresponding to the tidal flat video images, and labeling tidal flat video images where the tidal flat is submerged as the tidal flat seawater images.

In an implementation of the first aspect, the determining a number of observation lines based on the tidal flat seawater images, and setting a plurality of parallel flow velocity observation lines in a north-south direction and an east-west direction according to the number of the observation lines, respectively include: determining a number of preliminary east-west observation lines and a number of preliminary north-south observation lines through a north-south length and an east-west length of the target area to be monitored; obtaining an optical flow vector field between adjacent tidal flat seawater images of the target area to be monitored through a dense optical flow algorithm; calculating an east-west optical flow gradient and a north-south optical flow gradient based on the optical flow vector field; and adjusting, according to the east-west optical flow gradient and the north-south optical flow gradient, the number of the preliminary observation lines in corresponding directions, to obtain a number of east-west observation lines and a number of north-south observation lines.

In an implementation of the first aspect, the determining a number of preliminary east-west observation lines and a number of preliminary north-south observation lines through a north-south length and an east-west length of the target area to be monitored includes: setting a first observation line interval between the north-south observation lines, and setting a second observation line interval between the east-west observation lines; calculating the number of the preliminary east-west observation lines based on the north-south length and the first observation line interval; and calculating the number of the preliminary north-south observation lines based on the east-west length and the second observation line interval, where a formula for calculating the number of the preliminary east-west observation lines is: ${n}_{ν} = \frac{S}{Δ x}$
where *nᵥ* indicates the number of the preliminary east-west observation lines, *s* indicates the north-south length, and Δ*x* indicates the first observation line interval; and
a formula for calculating the number of the preliminary north-south observation lines is: ${n}_{u} = \frac{E}{Δ y}$
where *nᵤ* indicates the number of the preliminary north-south observation lines, *E* indicates the east-west length, and Δ*y* indicates the second observation line interval.

In an implementation of the first aspect, setting a gradient threshold; in a case where the east-west optical flow gradient is less than the gradient threshold, the number of the preliminary east-west observation lines is maintained; and in a case where the east-west optical flow gradient is greater than or equal to the gradient threshold, the first observation line interval is increased, and the number of the east-west observation lines is recalculated. In a case where the north-south optical flow gradient is less than the gradient threshold, the number of the preliminary north-south observation lines is maintained; and in a case where the north-south optical flow gradient is greater than or equal to the gradient threshold, the second observation line interval is increased, and the number of the north-south observation lines is recalculated.

In an implementation of the first aspect, the obtaining the flow velocity and the flow direction of the tidal flat coastal current based on a north-south component and an east-west component of the flow velocity nodes includes: extracting gray values on the observation lines based on the tidal flat seawater images, and arranging the gray values of the observation lines in time sequence, to form space-time images; performing two-dimensional fast Fourier transform on the space-time images, converting the space-time images from a space domain to a frequency domain, extracting main direction components in the frequency domain, and calculating flow velocity node included angles, where the flow velocity node included angles are included angles between principal direction components of flow velocity node textures and a vertical direction; calculating a north-south water-surface flow velocity component and an east-west water-surface flow velocity component according to the flow velocity node included angles respectively; and calculating a flow velocity vector and a flow direction of the flow velocity nodes based on the north-south water-surface flow velocity component and the east-west water-surface flow velocity component.

In an implementation of the first aspect, the space-time images include a north-south space-time image and an east-west space-time image. The extracting gray values on the observation lines based on the tidal flat seawater images, and arranging the gray values of the observation lines in time sequence, to form space-time images include: stacking north-south observation lines extracted in time sequence from each of the tidal flat seawater images to form a two-dimensional north-south gray matrix, and converting the two-dimensional north-south gray matrix into the north-south space-time image; and stacking east-west observation lines extracted in time sequence from each of the tidal flat seawater images to form a two-dimensional east-west gray matrix, and converting the two-dimensional east-west gray matrix into the east-west space-time image.

In an implementation of the first aspect, the flow velocity node included angles include an included angle between a principal direction of a texture of the north-south space-time image and the vertical direction, and an included angle between a principal direction of a texture of the east-west space-time image and the vertical direction. The calculating a north-south water-surface flow velocity component and an east-west water-surface flow velocity component according to the flow velocity node included angles respectively includes: calculating the north-south water-surface flow velocity component of the flow velocity nodes according to the included angle between the principal direction of the texture of the north-south space-time image and the vertical direction; and calculating the east-west water-surface flow velocity component of the flow velocity nodes according to the included angle between the principal direction of the texture of the east-west space-time image and the vertical direction, where a formula for calculating the north-south water-surface flow velocity component of the flow velocity nodes is: ${u}_{i} = \frac{{D}_{u}}{Δ t ⋅ cos} \left({θ}_{u}\right)$
where *uᵢ* indicates the north-south water-surface flow velocity component of the flow velocity nodes, *Dᵤ* indicates a displacement of a north-south banded texture, Δ*t* indicates a time interval, and *θᵤ* indicates an angle between the north-south banded texture and the vertical direction; and
a formula for calculating the east-west water-surface flow velocity component of the flow velocity nodes is: ${ν}_{i} = \frac{{D}_{ν}}{Δ t ⋅ cos} \left({θ}_{ν}\right)$
where *vᵢ* indicates the east-west water-surface flow velocity component of the flow velocity nodes, *Dᵥ* indicates a displacement of an east-west banded texture, Δ*t* indicates a time interval, and *θᵥ* indicates an angle between the east-west banded texture and the vertical direction.

In an implementation of the first aspect, a formula for calculating the flow velocity vector and the flow direction of the flow velocity nodes is: ${V}_{i , j} = \sqrt{{u}_{i}^{2} + {ν}_{j}^{2}}$ ${α}_{i , j} = {tan}^{- 1} \left(\frac{{u}_{i}}{{ν}_{j}}\right)$ where *V_{i,j}* indicates the flow velocity vectors of the flow velocity nodes, *α_{i,j}* indicates the flow direction of the flow velocity nodes, *uᵢ* indicates the north-south water-surface flow velocity component of the velocity nodes, and *vⱼ* indicates the east-west water-surface flow velocity component of flow velocity nodes.

In a second aspect, the present application provides a system for monitoring a flow velocity and a flow direction of a tidal flat coastal current based on photovoltaic video images of a tidal flat. The system includes: an obtainment module configured to obtain a tidal flat video of a target area to be monitored; a scene recognition module configured to perform scene recognition based on the tidal flat video to obtain tidal flat seawater images; an observation line setting module configured to determine a number of observation lines based on the tidal flat seawater images, and set a plurality of parallel flow velocity observation lines in a north-south direction and an east-west direction according to the number of the observation lines, respectively, where the parallel flow velocity observation lines include north-south parallel flow velocity observation lines and east-west parallel flow velocity observation lines; an intersection module configured to make the north-south parallel flow velocity observation lines intersect with the east-west parallel flow velocity observation lines to obtain flow velocity nodes; and a monitoring module configured to obtain the flow velocity and the flow direction of the tidal flat coastal current based on a north-south component and an east-west component of the flow velocity nodes.

Accordingly, the method for monitoring a flow velocity and a flow direction of a tidal flat coastal current based on photovoltaic video images of a tidal flat has the beneficial effects as follows:
(1) in the method for monitoring a flow velocity and a flow direction of a tidal flat coastal current based on photovoltaic video images of a tidal flat provided in the present application, a camera is mounted by using an existing infrastructure of a photovoltaic support, saving mounting cost of additional monitoring apparatuses or facilities. Photographing from a height of a photovoltaic panel can cover a large range of tidal flat areas to implement planar monitoring. A monitoring interest area (that is, a tidal flat seawater area) can be quickly positioned through the scene recognition algorithm, to avoid interference from unrelated areas;
(2) in the present application, density of the observation lines is automatically adjusted according to flow field characteristics of the tidal flat area (for example, an area having a stable change or an intense change) to guarantee a dynamic balance between observation resolution and efficiency. Moreover, design of the gridding observation lines not only captures overall flow velocity characteristics, but also effectively records details of local turbulence or significant changing areas;
(3) in the present application, data collection is uniform through node distribution, and flow velocity characteristics at different positions in a large-scale monitoring area can be fully reflected. The nodes become actual observation points for obtaining hydrodynamic vector information through north-south and east-west flow velocity component records. Moreover, a size and a direction of the overall flow velocity are obtained, such that calculation of hydrodynamic characteristics is more comprehensive and accurate; and
(4) the present application has broad applicability.

### BRIEF DESCRIPTION OF THE DRAWINGS

FIG. 1 is a schematic flowchart of an embodiment of a method for monitoring a flow velocity and a flow direction of a tidal flat coastal current based on photovoltaic video images of a tidal flat according to the present application;
FIG. 2 is a schematic diagram showing mounting of a camera on a photovoltaic support according to an embodiment of the method for monitoring a flow velocity and a flow direction of a tidal flat coastal current based on photovoltaic video images of a tidal flat in the present application;
FIG. 3 is a schematic flowchart of S2 in a method for monitoring a flow velocity and a flow direction of a tidal flat coastal current based on photovoltaic video images of a tidal flat according to the present application;
FIG. 4 is a schematic flowchart of S3 in a method for monitoring a flow velocity and a flow direction of a tidal flat coastal current based on photovoltaic video images of a tidal flat according to the present application;
FIG. 5 is a schematic diagram of setting observation lines on a tidal flat according to an embodiment of a method for monitoring a flow velocity and a flow direction of a tidal flat coastal current based on photovoltaic video images of a tidal flat in the present application;
FIG. 6 is a schematic flowchart of S5 in an embodiment of a method for monitoring a flow velocity and a flow direction of a tidal flat coastal current based on photovoltaic video images of a tidal flat according to the present application;
FIG. 7 is a schematic diagram of a principle structure of an embodiment of a system for monitoring a flow velocity and a flow direction of a tidal flat coastal current based on photovoltaic video images of a tidal flat according to the present application; and
FIG. 8 is a schematic diagram of a principle structure of an embodiment of a device for monitoring a flow velocity and a flow direction of a tidal flat coastal current based on photovoltaic video images of a tidal flat according to the present application.

### Reference numerals:

- 71: Obtainment module
- 72: Scene recognition module
- 73: Observation line setting module
- 74: Intersection module
- 75: Monitoring module
- 81: Processor
- 82: Memory

### DETAILED DESCRIPTION

The following describes the implementations of the present application through specific examples, and those skilled in the art can easily understand other advantages and effects of the present application from the contents disclosed in the specification. The present application may also be implemented or applied in other different specific implementations, and various modifications or changes may be made to various details in the specification based on different viewpoints and applications without departing from the spirit of the present application. It should be noted that embodiments and the features in the embodiments can be mutually combined without conflicts.

It should be noted that the drawings provided in the embodiments are only schematic illustrations of the basic concept of the present application. Accordingly, the drawings only show the components related to the present application rather than drawing according to the number, shape and size of the components in actual implementation, the shape, quantity and proportion of each component in actual implementation may be arbitrarily changed, and the component layout may be more complex.

The following embodiment of the present application provides a method for monitoring a flow velocity and a flow direction of a tidal flat coastal current based on photovoltaic video images of a tidal flat. Tidal flat videos are collected regularly by a plurality of cameras mounted below a photovoltaic panel on a photovoltaic support. Scene recognition is performed on the tidal flat videos, and tidal flat seawater images are obtained. In the tidal flat seawater images, a number of observation lines is determined according to a size of a monitoring area and complexity of a tidal flat surface flow field. A plurality of parallel flow velocity observation lines are set in a north-south direction and an east-west direction according to the number of the observation lines, respectively. The plurality of north-south flow velocity observation lines intersect with the plurality of east-west flow velocity observation lines to obtain flow velocity nodes. The flow velocity and the flow direction of the tidal flat coastal current are calculated through a north-south flow velocity component and an east-west flow velocity component of the flow velocity nodes. According to the present application, in the prior art, a traditional sea wave monitoring method causes some damage to the tidal flat surface to a certain extent and is only suitable for temporary short-term observation. Moreover, it relies on manual observation and periodic measurement, leading to low efficiency and a lack of real-time data obtaining capability. Furthermore, monitoring is unreliable due to the significant tidal fluctuations of the tidal flats. According to the present application, photographing from a height of a photovoltaic panel can cover a large range of tidal flat areas to implement planar monitoring. Moreover, a dynamic balance between observation resolution and efficiency is guaranteed, such that calculation of hydrodynamic characteristics is more comprehensive and accurate.

A method for monitoring a flow velocity and a flow direction of a tidal flat coastal current based on photovoltaic video images of a tidal flat provided in the embodiment of the present application will be described in detail below in combination with the accompanying drawings in the embodiment of the present application.

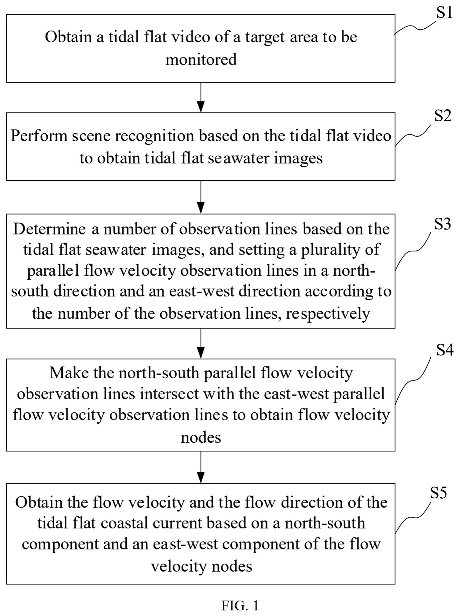

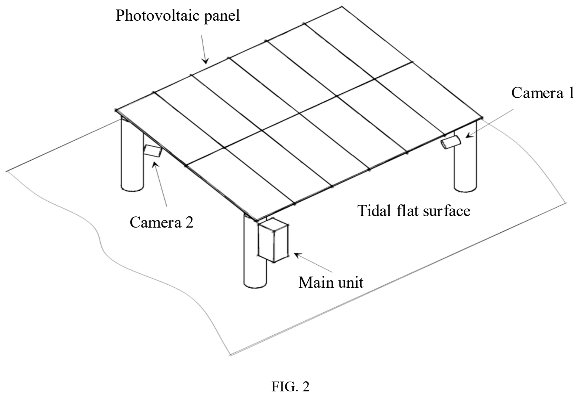

With reference to FIG. 1 and FIG. 2, FIG. 1 is a schematic flowchart of an embodiment of a method for monitoring a flow velocity and a flow direction of a tidal flat coastal current based on photovoltaic video images of a tidal flat according to the present application; and FIG. 2 is a schematic diagram showing mounting of a camera on a photovoltaic support according to an embodiment of the method for monitoring a flow velocity and a flow direction of a tidal flat coastal current based on photovoltaic video images of a tidal flat in the present application. As shown in FIG. 1 and FIG. 2, the embodiment provides a method for monitoring a flow velocity and a flow direction of a tidal flat coastal current based on photovoltaic video images of a tidal flat.

The method for monitoring a flow velocity and a flow direction of a tidal flat coastal current based on photovoltaic video images of a tidal flat specifically includes:
S1, a tidal flat video of a target area to be monitored is obtained.

In the embodiment, according to research requirements, tidal flat videos are collected regularly by a plurality of cameras mounted below a photovoltaic panel on a photovoltaic support.

Specifically, photographing angles of the cameras are perpendicular to a slope of the tidal flat. A baseline distance exists between the cameras in a same tidal flat area.

In the step, construction of a tidal flat photovoltaic field area provides convenience in mounting, power, safety and other aspects for an on-site deployment of a video monitoring system. The method fully utilizes convenient conditions to perform tidal flat elevation change monitoring work.

Please refer to FIG. 2.

For example, a suitable position is selected in a built offshore tidal flat photovoltaic field area, and a high-definition camera is fixedly mounted on a photovoltaic panel support to collect video images of a tidal flat surface. In order to guarantee that videos cover a desired viewing area, at least two or more cameras are mounted in a same area. Photographing angles of the cameras should be perpendicular to a slope of a tidal flat as far as possible. Moreover, photographing directions of the two cameras should be located at two ends or two sides of a photographing area respectively, with a baseline distance (that is, a baseline distance exists between the cameras in the same tidal flat area), so as to improve comprehensiveness of monitoring. Video signals of the cameras are connected to a hard disk video recorder and a computer host. A timing recording function is set. The video images of the tidal flat surface are collected regularly (for example, every hour or every half hour) to capture an influence of tidal changes and other dynamic factors on the tidal flat.

The tidal flat videos collected regularly may include a plurality of states, such as high tide (the tidal flat is submerged by seawater), low tide (the tidal flat is exposed), and partial submersion. In order to calculate and analyze the flow velocity and the flow direction of seawater of the tidal flat, images where the tidal flat is submerged need to be selected.

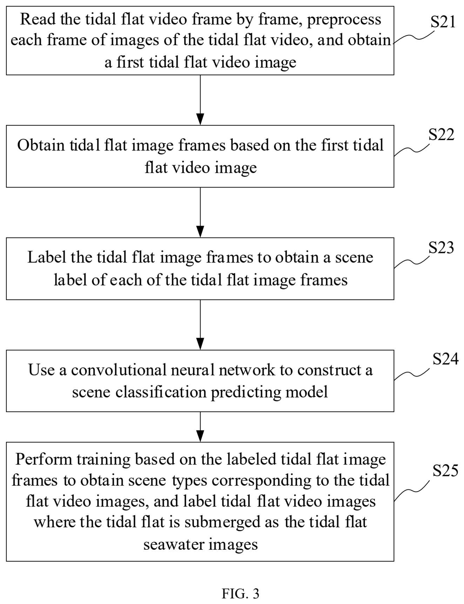

S2, scene recognition is performed based on the tidal flat video to obtain tidal flat seawater images. With reference to FIG. 3, FIG. 3 is a schematic flowchart of S2 in a method for monitoring a flow velocity and a flow direction of a tidal flat coastal current based on photovoltaic video images of a tidal flat according to the present application. As shown in FIG. 3, S2 includes:
S21, the tidal flat video is read frame by frame, each frame of images of the tidal flat video is preprocessed, and a first tidal flat video image is obtained;
S22, tidal flat image frames are obtained based on the first tidal flat video image;
S23, the tidal flat image frames are labeled to obtain a scene label of each of the tidal flat image frames, where the scene label includes any one or a combination of high tide, low tide, tidal flat exposure, and tidal flat submersion;
S24, a convolutional neural network is used to construct a scene classification predicting model; and
S25, training is performed based on the labeled tidal flat image frames to obtain scene types corresponding to the tidal flat video images, and tidal flat video images where the tidal flat is submerged are labeled as the tidal flat seawater images.

In the embodiment, the tidal flat video is read frame by frame, and each frame of the images of the tidal flat video is denoised and greyed, to obtain a preprocessed tidal flat video image (that is, the first tidal flat video image). Then, a large number of tidal flat image frames are extracted from the tidal flat monitoring video and used as input data for training a scene classification predicting model. Each of the images corresponds to a scene label. The scene label includes any one of high tide, low tide, tidal flat exposure, and tidal flat submersion. Then, the scene classification predicting model is constructed through the convolutional neural network. The tidal flat image frames are taken as input to train the scene classification predicting model, such that the scene label of each of the images is output. Finally, the tidal flat video images are input into the scene classification predicting model to obtain the scene types corresponding to the tidal flat video images. Tidal flat video images with output labels of tidal flat submersion are taken as the tidal flat seawater images.

Specifically, through the scene classification predicting model, meaningless pictures such as "tidal flat exposure" are directly excluded. Subsequent calculation is only for pictures with seawater, reducing resource consumption. In a tidal flat scene, a seawater fluctuation is a focus of monitoring. "Tidal flat exposure" or an edge transition scene (partial submersion) may introduce a false texture to disturb calculation results of the flow velocity. By constructing a scene classification predicting model based on a convolutional neural network (such as CNN), a large number of tidal flat monitoring videos can be automatically labeled and extracted, and seawater related images can be filtered quickly.

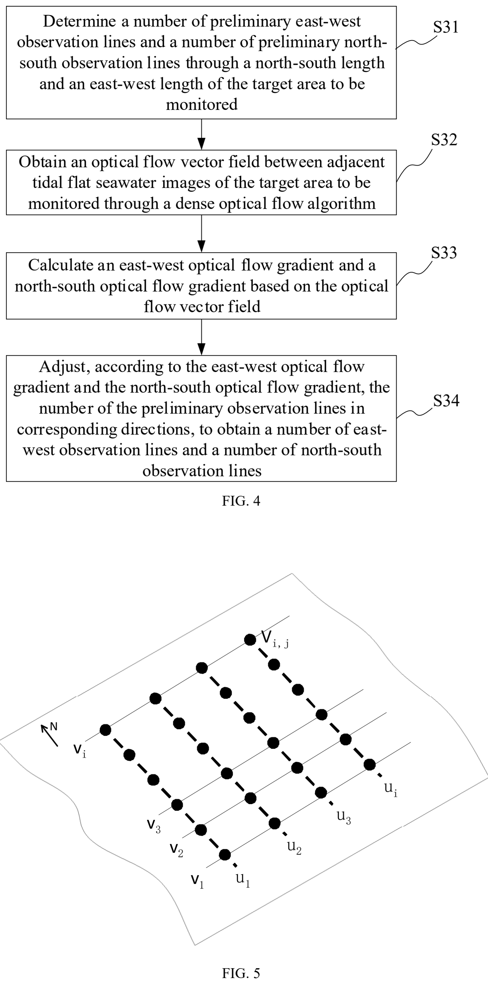

S3, a number of observation lines is determined based on the tidal flat seawater images, and a plurality of parallel flow velocity observation lines are set in a north-south direction and an east-west direction according to the number of the observation lines, respectively. The parallel flow velocity observation lines include north-south parallel flow velocity observation lines and east-west parallel flow velocity observation lines. With reference to FIG. 4 and FIG. 5, FIG. 4 is a schematic flowchart of S3 in a method for monitoring a flow velocity and a flow direction of a tidal flat coastal current based on photovoltaic video images of a tidal flat according to the present application. FIG. 5 is a schematic diagram of setting observation lines on a tidal flat according to an embodiment of a method for monitoring a flow velocity and a flow direction of a tidal flat coastal current based on photovoltaic video images of a tidal flat in the present application. As shown in FIG. 4 and FIG. 5, S3 includes:
S31, a number of preliminary east-west observation lines and a number of preliminary north-south observation lines are determined through a north-south length and an east-west length of the target area to be monitored.

In the embodiment, a first observation line interval is set between the north-south observation lines. A second observation line interval is set between the east-west observation lines. The number of the preliminary east-west observation lines is calculated based on the north-south length and the first observation line interval. The number of the preliminary north-south observation lines is calculated based on the east-west length and the second observation line interval.

The number *nᵥ* of the preliminary east-west observation lines is calculated through north-south length data S and the first observation line interval . A formula for calculating the number of the preliminary east-west observation lines is: ${n}_{ν} = \frac{S}{Δ x}$ where *nᵥ* indicates the number of the preliminary east-west observation lines, *s* indicates the north-south length, and Δ*x* indicates the first observation line interval.

The number *nᵤ* of the preliminary north-south observation lines is calculated through east-west length data E and the second observation line interval Δ*y* . A formula for calculating the number of the preliminary north-south observation lines is: ${n}_{u} = \frac{E}{Δ y}$ where *nᵤ* indicates the number of the preliminary north-south observation lines, *E* indicates the east-west length, and Δ*y* indicates the second observation line interval.

In summary, for an area with a length of 1 km, the initial interval may be set as that Δ*x* =10 meters, Δ*y* =10 meters (that is, one observation line is set every 10 meters). For high-resolution monitoring or a small area, the interval may be set to 5 meters or less. In a case where the observation lines are distributed too densely, a large number of redundant data will be produced during hydrodynamic monitoring of a large tidal flat or an ocean area, thus increasing a calculation burden. However, in a case where the observation lines are too sparse, it will lead to insufficient data and lose sensitivity to local changes in local flow velocity and tide in the area.

Accordingly, by setting the initial interval (Δ*x* and Δ*y* ), the number of observation lines is dynamically calculated in combination with an actual size (*s*, *E*) of the area. Not only the observation lines are distributed reasonably, but also efficient collection of monitoring data is achieved. As shown in FIG. 5, the north-south observation lines are named *u*₁, *u*₂,..., *uₙ*; and the east-west observation lines are named *v*₁, *v*₂,..., *vₙ.*

S32, an optical flow vector field between adjacent tidal flat seawater images of the target area to be monitored is obtained through a dense optical flow algorithm.

S33, an east-west optical flow gradient and a north-south optical flow gradient are calculated based on the optical flow vector field.

S34, according to the east-west optical flow gradient and the north-south optical flow gradient, the number of the preliminary observation lines in corresponding directions is adjusted, to obtain a number of east-west observation lines and a number of north-south observation lines. The step includes: a gradient threshold is set; in a case where the east-west optical flow gradient is less than the gradient threshold, the number of the preliminary east-west observation lines is maintained; in a case where the east-west optical flow gradient is greater than or equal to the gradient threshold, the first observation line interval is increased, and the number of the east-west observation lines is recalculated; in a case where the north-south optical flow gradient is less than the gradient threshold, the number of the preliminary north-south observation lines is maintained; and in a case where the north-south optical flow gradient is greater than or equal to the gradient threshold, the second observation line interval is increased, and the number of the north-south observation lines is recalculated.

In the embodiment, an optical flow vector field between adjacent tidal flat seawater images of a monitoring area is calculated through a dense optical flow algorithm. The east-west optical flow gradient and the north-south optical flow gradient are calculated through the optical flow vector field between the adjacent tidal flat seawater images separately.

In a case where the east-west optical flow gradient is less than the gradient threshold, the number of the preliminary east-west observation lines is maintained, otherwise, the first observation line interval Δ*x* is increased, and the number of the east-west observation lines is recalculated. In a case where the north-south optical flow gradient is less than the gradient threshold, the number of the preliminary north-south observation lines is maintained, otherwise, the second observation line interval Δ*y* is increased, and the number of the north-south observation lines is recalculated.

It can be seen from the above that observation grids initially divided by the length of the area and the fixed interval are only mechanically divided according to geometric attributes of the space, and cannot reflect a change amplitude of the flow velocity at different positions in the observation area. In an actual flow field, some areas may have intense changes in flow velocity, requiring higher monitoring line density, while other areas with stable changes may have reduced monitoring density. There are obvious non-uniformities in a seawater tidal flat flow field. For example, an area where the flow velocity changes smoothly does not need too dense observation lines, while an area where the vortex, turbulence and torrent change violently needs more observation lines. Grids divided fixedly may result in redundant calculations (waste of resources in areas having a steady change) and missing local features (insufficient resolution in areas having an intense change).

The optical flow vector field directly reflects dynamic characteristics of a water current in adjacent images, and gradients (east/south component) of the optical flow vector field can label severity of a flow field change in the area. By adjusting the interval between the observation lines based on optical flow gradients, the observation lines may be concentrated in the area having a rapid change and sparsely distributed in the area having a steady change, so as to achieve the focus and accuracy of monitoring. For areas having a steady change, the interval between the observation lines is kept constant, which can reduce waste of calculation resources. For areas having an intense change, the interval between the observation lines is reduced, and the number of the observation lines is increased, which can improve the resolution of these areas.

S4, the north-south parallel flow velocity observation lines intersect with the east-west parallel flow velocity observation lines to obtain flow velocity nodes.

In the embodiment, the plurality of north-south flow velocity observation lines intersect with the plurality of east-west flow velocity observation lines to obtain flow velocity nodes. Please refer to FIG. 3.

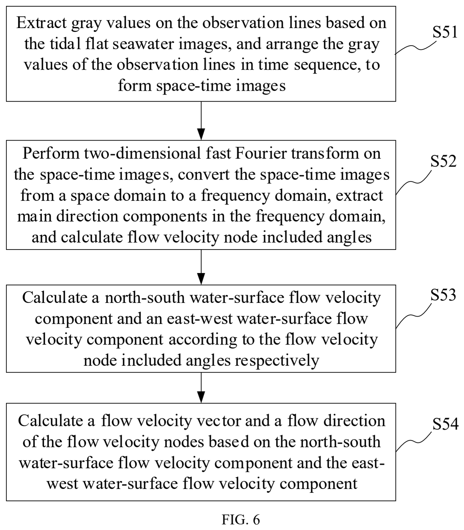

S5, the flow velocity and the flow direction of the tidal flat coastal current are obtained based on a north-south component and an east-west component of the flow velocity nodes. With reference to FIG. 6, FIG. 6 is a schematic flowchart of S5 in an embodiment of a method for monitoring a flow velocity and a flow direction of a tidal flat coastal current based on photovoltaic video images of a tidal flat according to the present application. As shown in FIG. 6, S5 includes:
S51, gray values on the observation lines are extracted based on the tidal flat seawater images, and the gray values of the observation lines are arranged in time sequence, to form space-time images.

The space-time images include a north-south space-time image and an east-west space-time image. North-south observation lines extracted in time sequence from each of the tidal flat seawater images are stacked to form a two-dimensional north-south gray matrix. The two-dimensional north-south gray matrix is converted into the north-south space-time image. East-west observation lines extracted in time sequence from each of the tidal flat seawater images are stacked to form a two-dimensional east-west gray matrix. The two-dimensional east-west gray matrix is converted into the east-west space-time image.

Specifically, in the step, after a color image is converted into a grayscale image, each pixel point only contains one gray value (that is, an intensity value between 0 and 255), which can greatly reduce a data amount and calculation complexity. Moreover, in the tidal flat seawater images, motion of the water current will form specific texture characteristics (such as ripple and flow direction) in the images. These characteristics are mainly reflected in changes of pixel intensity, and do not depend on color information. After gray-scale, changes of the pixel values in the images can still reflect motion characteristics of water current.

A grayscale space-time image is a two-dimensional matrix formed by stacking gray values of consecutive frames in time order. A horizontal axis indicates spatial positions (pixel positions on observation lines), and a vertical axis indicates a time series. This representation converts dynamic water current characteristics (for example, flow velocity and direction) into static texture features.

In the space-time images, the motion of the water current is represented by inclination or meandering of a gray texture, an inclination angle of a texture reflects a magnitude of the flow velocity, and a shape and a direction of the texture reflect the flow direction. By analyzing these texture features, dynamic changes of the water current can be captured intuitively. The original tidal flat video contains a large number of frames. Each of the frames is a two-dimensional image (spatial distribution), plus a time dimension, forming three-dimensional data. Flowing of seawater in the tidal flat is usually divided into two main directions: north-south (vertical direction) and east-west (horizontal direction). In a case where the direction is not distinguished, the characteristics of north-south and east-west water currents are mixed together, resulting in a decrease in the accuracy of feature extraction. By generating north-south and east-west grayscale space-time images separately, flow characteristics in the two directions can be clearly separated, which is convenient for independent analysis.

S52, two-dimensional fast Fourier transform is performed on the space-time images, the space-time images are converted from a space domain to a frequency domain, main direction components in the frequency domain are extracted, and flow velocity node included angles are calculated, where the flow velocity node included angles are included angles between principal direction components of flow velocity node textures and a vertical direction.

In the embodiment, two-dimensional fast Fourier transform is performed on the space-time images. The space-time images are converted from a space domain to a frequency domain. Main direction components in the frequency domain are extracted. Included angles *θ* between principal direction components of flow velocity node textures and a vertical direction are calculated.

Specifically, two-dimensional fast Fourier transform is performed on the space-time images. Main frequency components and direction components are analyzed. In a case where specific frequency components or direction components need to be extracted, corresponding filters (such as a low-pass filter, a high-pass filter, or a band-pass filter) can be applied to process a spectrogram. Two-dimensional inverse fast Fourier transform is performed on the spectrogram after filter processing. The spectrogram is converted back to the space domain to observe the extracted main direction components. In the extracted main direction components, the principal direction components related to the flow velocity node textures are determined. Once the principal direction components of the flow velocity node textures are determined, the included angles between the principal direction components and the vertical direction can be calculated. This can be implemented by calculating the direction angle between two direction vectors, depending on how the direction vectors are represented.

It should be noted that when Fourier transform and inverse Fourier transform are performed, attention should be paid to the sizes and boundary conditions of the image to guarantee correctness and effectiveness of the transform. Extracting the main direction components and calculating the included angle may need to select appropriate methods and algorithms in combination with specific image features and processing requirements. Throughout the process, the accuracy and stability of the data need attention to avoid numerical errors or instability.

S53, a north-south water-surface flow velocity component and an east-west water-surface flow velocity component are calculated according to the flow velocity node included angles *θ* respectively.

In the embodiment, the flow velocity node included angles include an included angle between a principal direction of a texture of the north-south space-time image and the vertical direction, and an included angle between a principal direction of a texture of the east-west space-time image and the vertical direction. The north-south water-surface flow velocity component of the flow velocity nodes is calculated according to the included angle *θᵤ* between the principal direction of the texture of the north-south space-time image and the vertical direction. The east-west water-surface flow velocity component of the flow velocity nodes is calculated according to the included angle *θᵥ* between the principal direction of the texture of the east-west space-time image and the vertical direction.

A formula for calculating the north-south water-surface flow velocity component of the flow velocity nodes is: ${u}_{i} = \frac{{D}_{u}}{Δ t ⋅ cos} \left({θ}_{u}\right)$ where *uᵢ* indicates the north-south water-surface flow velocity component of the flow velocity nodes, *Dᵤ* indicates a displacement of a north-south banded texture, Δ*t* indicates a time interval, and *θᵤ* indicates an angle between the north-south banded texture and the vertical direction.

A formula for calculating the east-west water-surface flow velocity component of the flow velocity nodes is: ${ν}_{i} = \frac{{D}_{ν}}{Δ t ⋅ cos} \left({θ}_{ν}\right)$ where *vᵢ* indicates the east-west water-surface flow velocity component of the flow velocity nodes, *Dᵥ* indicates a displacement of an east-west banded texture, Δ*t* indicates a time interval, and *θᵥ* indicates an angle between the east-west banded texture and the vertical direction .

Specifically, the north-south water-surface flow velocity component of the flow velocity nodes is calculated according to the included angle *θᵤ* between the principal direction of the texture of the north-south space-time image and the vertical direction. The east-west water-surface flow velocity component of the flow velocity nodes is calculated according to the included angle *θᵥ* between the principal direction of the texture of the east-west space-time image and the vertical direction.

It can be seen from the above that the space-time images can be transformed from the space domain to the frequency domain by two-dimensional fast Fourier transform (2D-FFT). In the frequency domain, the texture features in the space-time images appear as concentrated distribution of frequency components, and the principal directions of the textures correspond to direction components with largest energy in the frequency domain. This transformation simplifies complex texture shapes into the distribution of frequency components, and is convenient for extracting the main directions and the motion characteristics. The banded textures in the space-time images are projections of tracks of the water current in the images. Directions of the banded textures are closely related to the velocity direction of water current. By extracting the principal directions of the textures, a motion direction of the water current can be obtained directly. The overall velocity of the water current is a vector that contains a north-south component and an east-west component. By extracting the included angles of the principal directions of the textures in the north-south space-time image and the east-west space-time image, flow velocity components of the two directions can be calculated separately, and vector decomposition can be completed. By analyzing frequency domain features of the north-south space-time image and the east-west space-time image, the flow velocity components of the two directions can be extracted independently, which is convenient for constructing a multidimensional flow field model.

S54, a flow velocity vector and a flow direction of the flow velocity nodes are calculated based on the north-south water-surface flow velocity component and the east-west water-surface flow velocity component.

In the embodiment, the flow velocity vector and the flow direction of the flow velocity nodes are calculated according to the north-south water-surface flow velocity component and the east-west water-surface flow velocity component.

Specifically, a formula for calculating the flow velocity vector and the flow direction of the flow velocity nodes is: ${V}_{i , j} = \sqrt{{u}_{i}^{2} + {ν}_{j}^{2}}$ ${α}_{i , j} = {tan}^{- 1} \left(\frac{{u}_{i}}{{ν}_{j}}\right)$ where *V_{i,j}* indicates the flow velocity vectors of the flow velocity nodes, *α_{i,j}* indicates the flow direction of the flow velocity nodes, *uᵢ* indicates the north-south water-surface flow velocity component of the velocity nodes, and *vⱼ* indicates the east-west water-surface flow velocity component of flow velocity nodes.

In a two-dimensional plane, as shown in FIG. 3, motion characteristics (a velocity vector) of any water current can be represented by linear composition of two orthogonal directions (east-west and north-south). By using an arctangent function, azimuth angles of the vectors can be calculated, and thus a direction of the water current can be obtained. The flow velocity vector quantifies a speed of the water current alone and reflects strength of a hydrodynamic environment in a current area. A flow direction angle describes a motion direction of the water current alone and reflects a motion trend of flowing of seawater. It can effectively monitor the flow velocity and the flow direction of the seawater on the tidal flat surface, provide important data support for study of tidal flat surface erosion and siltation changes of offshore photovoltaic projects, and help a project management team to discover potential risks in time and take corresponding measures, so as to guarantee safety of a project and stability of a tidal flat ecological environment.

In the method for monitoring a flow velocity and a flow direction of a tidal flat coastal current based on photovoltaic video images of a tidal flat provided in the present application, a camera is mounted by using an existing infrastructure of a photovoltaic support, saving mounting cost of additional monitoring apparatuses or facilities. Photographing from a height of a photovoltaic panel can cover a large range of tidal flat areas to implement planar monitoring. A monitoring interest area (that is, a tidal flat seawater area) can be quickly positioned through the scene recognition algorithm, to avoid interference from unrelated areas. Density of the observation lines is automatically adjusted according to flow field characteristics of the tidal flat area (for example, an area having a stable change or an intense change) to guarantee a dynamic balance between observation resolution and efficiency. Moreover, design of the gridding observation lines not only captures overall flow velocity characteristics, but also effectively records details of local turbulence or significant changing areas. Similarly, in the present application, data collection is uniform through node distribution, and flow velocity characteristics at different positions in a large-scale monitoring area can be fully reflected. The nodes become actual observation points for obtaining hydrodynamic vector information through north-south and east-west flow velocity component records. Moreover, a size and a direction of the overall flow velocity are obtained, such that calculation of hydrodynamic characteristics is more comprehensive and accurate.

A protection scope of the method for monitoring a flow velocity and a flow direction of a tidal flat coastal current based on photovoltaic video images of a tidal flat described in the embodiment of the present application is not limited to an execution sequence of steps listed in the embodiment. All solutions implemented by adding or subtracting steps and replacing steps in the prior art according to the principle of the present application are included in the protection scope of the present application.

The embodiment of the present application further provides a system for monitoring a flow velocity and a flow direction of a tidal flat coastal current based on photovoltaic video images of a tidal flat. The system for monitoring a flow velocity and a flow direction of a tidal flat coastal current based on photovoltaic video images of a tidal flat can implement the method for monitoring a flow velocity and a flow direction of a tidal flat coastal current based on photovoltaic video images of a tidal flat of the present application. However, a device for implementing the method for monitoring a flow velocity and a flow direction of a tidal flat coastal current based on photovoltaic video images of a tidal flat described in the present application includes, but is not limited to, a structure of the system for monitoring a flow velocity and a flow direction of a tidal flat coastal current based on photovoltaic video images of a tidal flat listed in the embodiment. Any structural deformation and replacement of the prior art made according to the principle of the present application are included in the protection scope of the present application.

The system for monitoring a monitoring a flow velocity and a flow direction of a tidal flat coastal current based on photovoltaic video images of a tidal flat provided in the embodiment will be described in detail below in combination with the drawings.

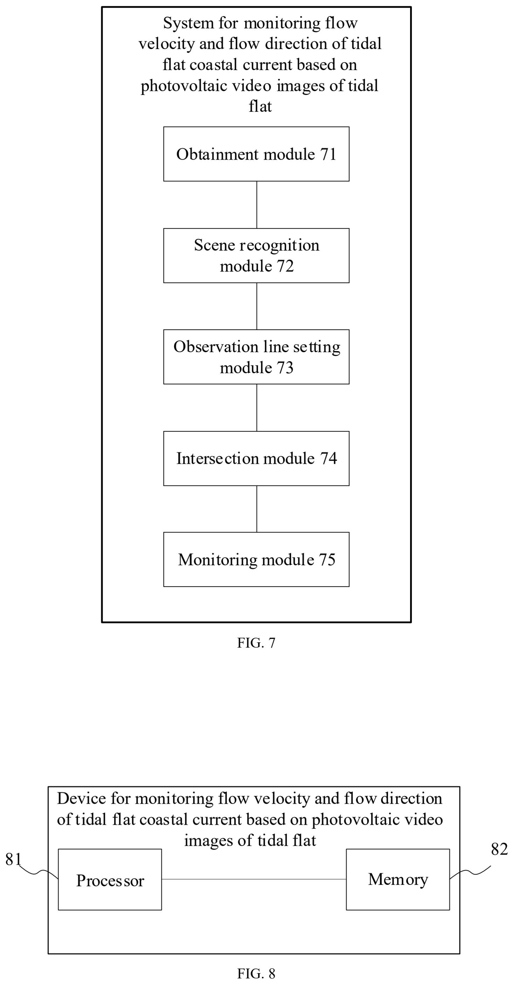

The embodiment provides a system for monitoring a flow velocity and a flow direction of a tidal flat coastal current based on photovoltaic video images of a tidal flat. The system includes:
with reference to FIG. 7, FIG. 7 is a schematic diagram of a principle structure of an embodiment of a system for monitoring a flow velocity and a flow direction of a tidal flat coastal current based on photovoltaic video images of a tidal flat according to the present application. As shown in FIG. 7, the system for monitoring a flow velocity and a flow direction of a tidal flat coastal current based on photovoltaic video images of a tidal flat includes an obtainment module 71, a scene recognition module 72, an observation line setting module 73, an intersection module 74, and a monitoring module 75.

The obtainment module 71 is configured to obtain a tidal flat video of a target area to be monitored.

In the embodiment, according to research requirements, tidal flat videos are collected regularly by a plurality of cameras mounted below a photovoltaic panel on a photovoltaic support.

Specifically, photographing angles of the cameras are perpendicular to a slope of the tidal flat. A baseline distance exists between the cameras in a same tidal flat area.

In the step, construction of a tidal flat photovoltaic field area provides convenience in mounting, power, safety and other aspects for an on-site deployment of a video monitoring system. The method fully utilizes convenient conditions to perform tidal flat elevation change monitoring work.

The scene recognition module 72 is connected to the obtainment module 71 and configured to perform scene recognition based on the tidal flat video to obtain tidal flat seawater images.

In the embodiment, the tidal flat video is read frame by frame, each frame of images of the tidal flat video is preprocessed, and a first tidal flat video image is obtained. Tidal flat image frames are obtained based on the first tidal flat video image. The tidal flat image frames are labeled to obtain a scene label of each of the tidal flat image frames. The scene label includes any one or a combination of high tide, low tide, tidal flat exposure, and tidal flat submersion. A convolutional neural network is used to construct a scene classification predicting model. Training is performed based on the labeled tidal flat image frames to obtain scene types corresponding to the tidal flat video images. Tidal flat video images where the tidal flat is submerged are labeled as the tidal flat seawater images.

Specifically, through the scene classification predicting model, meaningless pictures such as "tidal flat exposure" are directly excluded. Subsequent calculation is only for pictures with seawater, reducing resource consumption. In a tidal flat scene, a seawater fluctuation is a focus of monitoring. "Tidal flat exposure" or an edge transition scene (partial submersion) may introduce a false texture to disturb calculation results of the flow velocity. By constructing a scene classification predicting model based on a convolutional neural network, a large number of tidal flat monitoring videos can be automatically labeled and extracted, and seawater related images can be filtered quickly.

The observation line setting module 73 is configured to determine a number of observation lines based on the tidal flat seawater images, and set a plurality of parallel flow velocity observation lines in a north-south direction and an east-west direction according to the number of the observation lines, respectively. The parallel flow velocity observation lines include north-south parallel flow velocity observation lines and east-west parallel flow velocity observation lines.

In the embodiment, a first observation line interval is set between the north-south observation lines. A second observation line interval is set between the east-west observation lines. The number of the preliminary east-west observation lines is calculated based on the north-south length and the first observation line interval. The number of the preliminary north-south observation lines is calculated based on the east-west length and the second observation line interval.

An optical flow vector field between adjacent tidal flat seawater images of the target area to be monitored is obtained through a dense optical flow algorithm; an east-west optical flow gradient and a north-south optical flow gradient are calculated based on the optical flow vector field. According to the east-west optical flow gradient and the north-south optical flow gradient, the number of the preliminary observation lines in corresponding directions is adjusted, to obtain a number of east-west observation lines and a number of north-south observation lines. The step includes: a gradient threshold is set; in a case where the east-west optical flow gradient is less than the gradient threshold, the number of the preliminary east-west observation lines is maintained; in a case where the east-west optical flow gradient is greater than or equal to the gradient threshold, the first observation line interval is increased, and the number of the east-west observation lines is recalculated; in a case where the north-south optical flow gradient is less than the gradient threshold, the number of the preliminary north-south observation lines is maintained; and in a case where the north-south optical flow gradient is greater than or equal to the gradient threshold, the second observation line interval is increased, and the number of the north-south observation lines is recalculated.

The intersection module 74 is configured to make the north-south parallel flow velocity observation lines intersect with the east-west parallel flow velocity observation lines to obtain flow velocity nodes.

The monitoring module 75 is configured to obtain the flow velocity and the flow direction of the tidal flat coastal current based on a north-south component and an east-west component of the flow velocity nodes.

Gray values on the observation lines are extracted based on the tidal flat seawater images, and the gray values of the observation lines are arranged in time sequence, to form space-time images.

The space-time images include a north-south space-time image and an east-west space-time image. North-south observation lines extracted in time sequence from each of the tidal flat seawater images are stacked to form a two-dimensional north-south gray matrix. The two-dimensional north-south gray matrix is converted into the north-south space-time image. East-west observation lines extracted in time sequence from each of the tidal flat seawater images are stacked to form a two-dimensional east-west gray matrix. The two-dimensional east-west gray matrix is converted into the east-west space-time image.

Two-dimensional fast Fourier transform is performed on the space-time images. The space-time images are converted from a space domain to a frequency domain. Main direction components in the frequency domain are extracted. Flow velocity node included angles are calculated. The flow velocity node included angles are included angles between principal direction components of flow velocity node textures and a vertical direction.

In the embodiment, two-dimensional fast Fourier transform is performed on the space-time images. The space-time images are converted from a space domain to a frequency domain. Main direction components in the frequency domain are extracted. Included angles *θ* between principal direction components of flow velocity node textures and a vertical direction are calculated.

A north-south water-surface flow velocity component and an east-west water-surface flow velocity component are calculated according to the flow velocity node included angles *θ* respectively.

In the embodiment, the flow velocity node included angles include an included angle between a principal direction of a texture of the north-south space-time image and the vertical direction, and an included angle between a principal direction of a texture of the east-west space-time image and the vertical direction. The north-south water-surface flow velocity component of the flow velocity nodes is calculated according to the included angle *θᵤ* between the principal direction of the texture of the north-south space-time image and the vertical direction. The east-west water-surface flow velocity component of the flow velocity nodes is calculated according to the included angle *θᵥ* between the principal direction of the texture of the east-west space-time image and the vertical direction.

A formula for calculating the north-south water-surface flow velocity component of the flow velocity nodes is: ${u}_{i} = \frac{{D}_{u}}{Δ t ⋅ cos} \left({θ}_{u}\right)$ where *uᵢ* indicates the north-south water-surface flow velocity component of the flow velocity nodes, *Dᵤ* indicates a displacement of a north-south banded texture, Δ*t* indicates a time interval, and *θᵤ* indicates an angle between the north-south banded texture and the vertical direction.

A formula for calculating the east-west water-surface flow velocity component of the flow velocity nodes is: ${ν}_{i} = \frac{{D}_{ν}}{Δ t ⋅ cos} \left({θ}_{ν}\right)$ where *vᵢ* indicates the east-west water-surface flow velocity component of the flow velocity nodes, *Dᵥ* indicates a displacement of an east-west banded texture, Δ*t* indicates a time interval, and *θᵥ* indicates an angle between the east-west banded texture and the vertical direction.

A flow velocity vector and a flow direction of the flow velocity nodes are calculated based on the north-south water-surface flow velocity component and the east-west water-surface flow velocity component.

In the embodiment, the flow velocity vector and the flow direction of the flow velocity nodes are calculated according to the north-south water-surface flow velocity component and the east-west water-surface flow velocity component.

A formula for calculating the flow velocity vector and the flow direction of the flow velocity nodes is: ${V}_{i , j} = \sqrt{{u}_{i}^{2} + {ν}_{j}^{2}}$ ${α}_{i , j} = {tan}^{- 1} \left(\frac{{u}_{i}}{{ν}_{j}}\right)$ where *V_{i,j}* indicates the flow velocity vectors of the flow velocity nodes, *α_{i,j}* indicates the flow direction of the flow velocity nodes, *uᵢ* indicates the north-south water-surface flow velocity component of the velocity nodes, and *vⱼ* indicates the east-west water-surface flow velocity component of flow velocity nodes.

A model for monitoring a flow velocity and a flow direction of a tidal flat coastal current based on photovoltaic video images of a tidal flat is established based on the system for monitoring a flow velocity and a flow direction of a tidal flat coastal current based on photovoltaic video images of a tidal flat. The density of the observation lines is automatically adjusted according to flow field characteristics of the tidal flat area (for example, an area having a stable change or an intense change) to guarantee a dynamic balance between observation resolution and efficiency. Moreover, calculation of hydrodynamic characteristics can be more comprehensive and accurate.

It should be noted that it should be understood that the division of the above modules of the system is only a division of logical functions, which can be fully or partially integrated into a physical entity or physically separated. These modules may be implemented entirely in a manner of software calling through processing elements, entirely in a form of hardware, partially in the manner of software calling through processing elements, and partially in the form of hardware. For example, the x module may be a processing element separately provided, may be integrated into a chip of the system, may also be stored in a memory of the system in a form of a program code and called by a processing element of the system to execute the function of the x module. Implementation of other modules is similar. Moreover, all or some of these modules can be integrated together or implemented independently. The processing element described herein may be an integrated circuit having a signal processing capacity. During implementation, all the steps of the method described above or the modules described above can be completed through an integrated logic circuit of hardware or instructions in the form of software in the processor element.

These modules may be one or more integrated circuits configured to implement the above method, such as one or more application specific integrated circuits (ASICs), or one or more digital signal processors (DSPs), or one or more field programmable gate arrays (FPGAs). For another example, when a certain module is implemented in a manner of scheduling a program code by a processing element, the processing element may be a general purpose processor, such as a central processing unit (CPU) or other processor capable of calling the program code. As another example, these modules can be integrated together in a form of a system-on-a-chip (SOC).

With reference to FIG. 8, FIG. 8 is a schematic diagram of a principle structure of an embodiment of a device for monitoring a flow velocity and a flow direction of a tidal flat coastal current based on photovoltaic video images of a tidal flat according to the present application. As shown in FIG. 8, the embodiment provides a device for monitoring a flow velocity and a flow direction of a tidal flat coastal current based on photovoltaic video images of a tidal flat. The device for monitoring a flow velocity and a flow direction of a tidal flat coastal current based on photovoltaic video images of a tidal flat includes a processor 81 and a memory 82. The memory 82 is configured to store a computer program. The processor 81 is connected to the memory 82 and configured to execute the computer program stored in the memory 82, to make the device for monitoring a flow velocity and a flow direction of a tidal flat coastal current based on photovoltaic video images of a tidal flat perform all steps of the method for monitoring a flow velocity and a flow direction of a tidal flat coastal current based on photovoltaic video images of a tidal flat as described above.

Preferably, the memory may include a random access memory (RAM), and may also include a non-volatile memory, such as at least one disk memory.

The processor may be a general purpose processor including a central processing unit (CPU), a network processor (NP), etc.; or may be a digital signal processor (DSP), an application specific integrated circuit (ASIC), a field-programmable gate array (FPGA) or another programmable logic device, a discrete gate or transistor logic device, or a discrete hardware component.

In summary, the method for monitoring a flow velocity and a flow direction of a tidal flat coastal current based on photovoltaic video images of a tidal flat provided in the present application has the beneficial effects as follows.

In the method for monitoring a flow velocity and a flow direction of a tidal flat coastal current based on photovoltaic video images of a tidal flat provided in the present application, a camera is mounted by using an existing infrastructure of a photovoltaic support, saving mounting cost of additional monitoring apparatuses or facilities. Photographing from a height of a photovoltaic panel can cover a large range of tidal flat areas to implement planar monitoring. A monitoring interest area (that is, a tidal flat seawater area) can be quickly positioned through the scene recognition algorithm, to avoid interference from unrelated areas. Density of the observation lines is automatically adjusted according to flow field characteristics of the tidal flat area (for example, an area having a stable change or an intense change) to guarantee a dynamic balance between observation resolution and efficiency. Moreover, design of the gridding observation lines not only captures overall flow velocity characteristics, but also effectively records details of local turbulence or significant changing areas. Similarly, in the present application, data collection is uniform through node distribution, and flow velocity characteristics at different positions in a large-scale monitoring area can be fully reflected. The nodes become actual observation points for obtaining hydrodynamic vector information through north-south and east-west flow velocity component records. Moreover, a size and a direction of the overall flow velocity are obtained, such that calculation of hydrodynamic characteristics is more comprehensive and accurate.

The above embodiments are merely illustrative of principles and effects of the present application, and are not intended to limit the present application. Modifications and variations of the above embodiments may be made by those skilled in the art without departing from the spirit and scope of the present application. Therefore, all equivalent modifications or changes made by those with ordinary knowledge in the technical field without departing from the spirit and technical ideas disclosed in the present application shall still be covered by the claims of the present application.

## Claims

1. A method for monitoring a flow velocity and a flow direction of a tidal flat coastal current based on photovoltaic video images of a tidal flat, **characterized by** comprising:
obtaining a tidal flat video of a target area to be monitored;
performing scene recognition based on the tidal flat video to obtain tidal flat seawater images;
determining a number of observation lines based on the tidal flat seawater images, and setting a plurality of parallel flow velocity observation lines in a north-south direction and an east-west direction according to the number of the observation lines, respectively, wherein the parallel flow velocity observation lines comprise north-south parallel flow velocity observation lines and east-west parallel flow velocity observation lines;
making the north-south parallel flow velocity observation lines intersect with the east-west parallel flow velocity observation lines to obtain flow velocity nodes; and
obtaining the flow velocity and the flow direction of the tidal flat coastal current based on a north-south component and an east-west component of the flow velocity nodes.

2. The method for monitoring a flow velocity and a flow direction of a tidal flat coastal current based on photovoltaic video images of a tidal flat according to claim 1, **characterized in that** the performing scene recognition based on the tidal flat video to obtain tidal flat seawater images comprises:
reading the tidal flat video frame by frame, preprocessing each frame of images of the tidal flat video, and obtaining a first tidal flat video image;
obtaining tidal flat image frames based on the first tidal flat video image;
labeling the tidal flat image frames to obtain a scene label of each of the tidal flat image frames, wherein the scene label comprises any one or a combination of high tide, low tide, tidal flat exposure, and tidal flat submersion;
using a convolutional neural network to construct a scene classification predicting model; and
performing training based on the labeled tidal flat image frames to obtain scene types corresponding to the tidal flat video images, and labeling tidal flat video images where the tidal flat is submerged as the tidal flat seawater images.

3. The method for monitoring a flow velocity and a flow direction of a tidal flat coastal current based on photovoltaic video images of a tidal flat according to claim 1, **characterized in that** the determining a number of observation lines based on the tidal flat seawater images, and setting a plurality of parallel flow velocity observation lines in a north-south direction and an east-west direction according to the number of the observation lines, respectively comprise:
determining a number of preliminary east-west observation lines and a number of preliminary north-south observation lines through a north-south length and an east-west length of the target area to be monitored;
obtaining an optical flow vector field between adjacent tidal flat seawater images of the target area to be monitored through a dense optical flow algorithm;
calculating an east-west optical flow gradient and a north-south optical flow gradient based on the optical flow vector field; and
adjusting, according to the east-west optical flow gradient and the north-south optical flow gradient, the number of the preliminary observation lines in corresponding directions, to obtain a number of east-west observation lines and a number of north-south observation lines.

4. The method for monitoring a flow velocity and a flow direction of a tidal flat coastal current based on photovoltaic video images of a tidal flat according to claim 3, **characterized in that** the determining a number of preliminary east-west observation lines and a number of preliminary north-south observation lines through a north-south length and an east-west length of the target area to be monitored comprises:
setting a first observation line interval between the north-south observation lines, and setting a second observation line interval between the east-west observation lines;
calculating the number of the preliminary east-west observation lines based on the north-south length and the first observation line interval; and
calculating the number of the preliminary north-south observation lines based on the east-west length and the second observation line interval, wherein
a formula for calculating the number of the preliminary east-west observation lines is: ${n}_{ν} = \frac{S}{Δ x}$
wherein *nᵥ* indicates the number of the preliminary east-west observation lines, *s* indicates the north-south length, and Δ*x* indicates the first observation line interval; and
a formula for calculating the number of the preliminary north-south observation lines is: ${n}_{u} = \frac{E}{Δ y}$
wherein *nᵤ* indicates the number of the preliminary north-south observation lines, *E* indicates the east-west length, and Δ*y* indicates the second observation line interval.

5. The method for monitoring a flow velocity and a flow direction of a tidal flat coastal current based on photovoltaic video images of a tidal flat according to claim 4, **characterized in that**,
setting a gradient threshold;
in a case where the east-west optical flow gradient is less than the gradient threshold, the number of the preliminary east-west observation lines is maintained; and in a case where the east-west optical flow gradient is greater than or equal to the gradient threshold, the first observation line interval is increased, and the number of the east-west observation lines is recalculated;
and
in a case where the north-south optical flow gradient is less than the gradient threshold, the number of the preliminary north-south observation lines is maintained; and in a case where the north-south optical flow gradient is greater than or equal to the gradient threshold, the second observation line interval is increased, and the number of the north-south observation lines is recalculated.

6. The method for monitoring a flow velocity and a flow direction of a tidal flat coastal current based on photovoltaic video images of a tidal flat according to claim 1, **characterized in that** the obtaining the flow velocity and the flow direction of the tidal flat coastal current based on a north-south component and an east-west component of the flow velocity nodes comprises:
extracting gray values on the observation lines based on the tidal flat seawater images, and arranging the gray values of the observation lines in time sequence, to form space-time images;
performing two-dimensional fast Fourier transform on the space-time images, converting the space-time images from a space domain to a frequency domain, extracting main direction components in the frequency domain, and calculating flow velocity node included angles, wherein the flow velocity node included angles are included angles between principal direction components of flow velocity node textures and a vertical direction;
calculating a north-south water-surface flow velocity component and an east-west water-surface flow velocity component according to the flow velocity node included angles respectively; and
calculating a flow velocity vector and a flow direction of the flow velocity nodes based on the north-south water-surface flow velocity component and the east-west water-surface flow velocity component.

7. The method for monitoring a flow velocity and a flow direction of a tidal flat coastal current based on photovoltaic video images of a tidal flat according to claim 6, **characterized in that** the space-time images comprise a north-south space-time image and an east-west space-time image; and the extracting gray values on the observation lines based on the tidal flat seawater images, and arranging the gray values of the observation lines in time sequence, to form space-time images comprise:
stacking north-south observation lines extracted in time sequence from each of the tidal flat seawater images to form a two-dimensional north-south gray matrix, and converting the two-dimensional north-south gray matrix into the north-south space-time image; and
stacking east-west observation lines extracted in time sequence from each of the tidal flat seawater images to form a two-dimensional east-west gray matrix, and converting the two-dimensional east-west gray matrix into the east-west space-time image.

8. The method for monitoring a flow velocity and a flow direction of a tidal flat coastal current based on photovoltaic video images of a tidal flat according to claim 6, **characterized in that** the flow velocity node included angles comprise an included angle between a principal direction of a texture of the north-south space-time image and the vertical direction, and an included angle between a principal direction of a texture of the east-west space-time image and the vertical direction; and the calculating a north-south water-surface flow velocity component and an east-west water-surface flow velocity component according to the flow velocity node included angles respectively comprises:
calculating the north-south water-surface flow velocity component of the flow velocity nodes according to the included angle *θᵤ* between the principal direction of the texture of the north-south space-time image and the vertical direction; and
calculating the east-west water-surface flow velocity component of the flow velocity nodes according to the included angle *θᵥ* between the principal direction of the texture of the east-west space-time image and the vertical direction, wherein
a formula for calculating the north-south water-surface flow velocity component of the flow velocity nodes is: ${u}_{i} = \frac{{D}_{u}}{Δ t ⋅ cos} \left({θ}_{u}\right)$
wherein *uᵢ* indicates the north-south water-surface flow velocity component of the flow velocity nodes, *Dᵤ* indicates a displacement of a north-south banded texture, Δ*t* indicates a time interval, and *θᵤ* indicates an angle between the north-south banded texture and the vertical direction; and
a formula for calculating the east-west water-surface flow velocity component of the flow velocity nodes is: ${ν}_{i} = \frac{{D}_{ν}}{Δ t ⋅ cos} \left({θ}_{ν}\right)$
wherein *vᵢ* indicates the east-west water-surface flow velocity component of the flow velocity nodes, *Dᵥ* indicates a displacement of an east-west banded texture, Δ*t* indicates a time interval, and *θᵥ* indicates an angle between the east-west banded texture and the vertical direction .

9. The method for monitoring a flow velocity and a flow direction of a tidal flat coastal current based on photovoltaic video images of a tidal flat according to claim 6, **characterized in that**
a formula for calculating the flow velocity vector and the flow direction of the flow velocity nodes is: ${V}_{i , j} = \sqrt{{u}_{i}^{2} + {ν}_{j}^{2}}$ ${α}_{i , j} = {tan}^{- 1} \left(\frac{{u}_{i}}{{ν}_{j}}\right)$
wherein *V_{i,j}* indicates the flow velocity vectors of the flow velocity nodes, *α_{i,j}* indicates the flow direction of the flow velocity nodes, *uᵢ* indicates the north-south water-surface flow velocity component of the velocity nodes, and *vⱼ* indicates the east-west water-surface flow velocity component of flow velocity nodes.

10. A system for monitoring a flow velocity and a flow direction of a tidal flat coastal current based on photovoltaic video images of a tidal flat, **characterized by** comprising:
an obtainment module configured to obtain a tidal flat video of a target area to be monitored;
a scene recognition module configured to perform scene recognition based on the tidal flat video to obtain tidal flat seawater images;
an observation line setting module configured to determine a number of observation lines based on the tidal flat seawater images, and set a plurality of parallel flow velocity observation lines in a north-south direction and an east-west direction according to the number of the observation lines, respectively, wherein the parallel flow velocity observation lines comprise north-south parallel flow velocity observation lines and east-west parallel flow velocity observation lines;
an intersection module configured to make the north-south parallel flow velocity observation lines intersect with the east-west parallel flow velocity observation lines to obtain flow velocity nodes; and
a monitoring module configured to obtain the flow velocity and the flow direction of the tidal flat coastal current based on a north-south component and an east-west component of the flow velocity nodes.

## Amended claims

### Amended claims in accordance with Rule 137(2) EPC.

1. A method for monitoring a flow velocity and a flow direction of a tidal flat coastal current based on photovoltaic video images of a tidal flat, the photovoltaic video images of a tidal flat are captured using a camera mounted on an existing infrastructure of a photovoltaic support, **characterized by** comprising:
obtaining a tidal flat video of a target area to be monitored;
performing scene recognition based on the tidal flat video to obtain tidal flat seawater images;
determining a number of observation lines based on the tidal flat seawater images, and setting a plurality of parallel flow velocity observation lines in a north-south direction and an east-west direction according to the number of the observation lines, respectively, wherein the parallel flow velocity observation lines comprise north-south parallel flow velocity observation lines and east-west parallel flow velocity observation lines;
making the north-south parallel flow velocity observation lines intersect with the east-west parallel flow velocity observation lines to obtain flow velocity nodes; and
obtaining the flow velocity and the flow direction of the tidal flat coastal current based on a north-south component and an east-west component of the flow velocity nodes.

2. The method for monitoring a flow velocity and a flow direction of a tidal flat coastal current based on photovoltaic video images of a tidal flat according to claim 1, **characterized in that** the performing scene recognition based on the tidal flat video to obtain tidal flat seawater images comprises:
reading the tidal flat video frame by frame, preprocessing each frame of images of the tidal flat video, and obtaining a first tidal flat video image;
obtaining tidal flat image frames based on the first tidal flat video image;
labeling the tidal flat image frames to obtain a scene label of each of the tidal flat image frames, wherein the scene label comprises any one or a combination of high tide, low tide, tidal flat exposure, and tidal flat submersion;
using a convolutional neural network to construct a scene classification predicting model; and
performing training based on the labeled tidal flat image frames to obtain scene types corresponding to the tidal flat video images, and labeling tidal flat video images where the tidal flat is submerged as the tidal flat seawater images.

3. The method for monitoring a flow velocity and a flow direction of a tidal flat coastal current based on photovoltaic video images of a tidal flat according to claim 1, **characterized in that** the determining a number of observation lines based on the tidal flat seawater images, and setting a plurality of parallel flow velocity observation lines in a north-south direction and an east-west direction according to the number of the observation lines, respectively comprise:
determining a number of preliminary east-west observation lines and a number of preliminary north-south observation lines through a north-south length and an east-west length of the target area to be monitored;
obtaining an optical flow vector field between adjacent tidal flat seawater images of the target area to be monitored through a dense optical flow algorithm;
calculating an east-west optical flow gradient and a north-south optical flow gradient based on the optical flow vector field; and
adjusting, according to the east-west optical flow gradient and the north-south optical flow gradient, the number of the preliminary observation lines in corresponding directions, to obtain a number of east-west observation lines and a number of north-south observation lines.

4. The method for monitoring a flow velocity and a flow direction of a tidal flat coastal current based on photovoltaic video images of a tidal flat according to claim 3, **characterized in that** the determining a number of preliminary east-west observation lines and a number of preliminary north-south observation lines through a north-south length and an east-west length of the target area to be monitored comprises:
setting a first observation line interval between the north-south observation lines, and setting a second observation line interval between the east-west observation lines;
calculating the number of the preliminary east-west observation lines based on the north-south length and the first observation line interval; and
calculating the number of the preliminary north-south observation lines based on the east-west length and the second observation line interval, wherein
a formula for calculating the number of the preliminary east-west observation lines is: ${n}_{ν} = \frac{s}{Δ x}$
wherein *nᵥ* indicates the number of the preliminary east-west observation lines, *s* indicates the north-south length, and Δ*x* indicates the first observation line interval; and
a formula for calculating the number of the preliminary north-south observation lines is: ${n}_{u} = \frac{E}{Δ y}$
wherein *nᵤ* indicates the number of the preliminary north-south observation lines, *E* indicates the east-west length, and Δ*y* indicates the second observation line interval.

5. The method for monitoring a flow velocity and a flow direction of a tidal flat coastal current based on photovoltaic video images of a tidal flat according to claim 4, **characterized in that**,
setting a gradient threshold;
in a case where the east-west optical flow gradient is less than the gradient threshold, the number of the preliminary east-west observation lines is maintained; and in a case where the east-west optical flow gradient is greater than or equal to the gradient threshold, the first observation line interval is increased, and the number of the east-west observation lines is recalculated;
and
in a case where the north-south optical flow gradient is less than the gradient threshold, the number of the preliminary north-south observation lines is maintained; and in a case where the north-south optical flow gradient is greater than or equal to the gradient threshold, the second observation line interval is increased, and the number of the north-south observation lines is recalculated.

6. The method for monitoring a flow velocity and a flow direction of a tidal flat coastal current based on photovoltaic video images of a tidal flat according to claim 1, **characterized in that** the obtaining the flow velocity and the flow direction of the tidal flat coastal current based on a north-south component and an east-west component of the flow velocity nodes comprises:
extracting gray values on the observation lines based on the tidal flat seawater images, and arranging the gray values of the observation lines in time sequence, to form space-time images;
performing two-dimensional fast Fourier transform on the space-time images, converting the space-time images from a space domain to a frequency domain, extracting main direction components in the frequency domain, and calculating flow velocity node included angles, wherein the flow velocity node included angles are included angles between principal direction components of flow velocity node textures and a vertical direction;
calculating a north-south water-surface flow velocity component and an east-west water-surface flow velocity component according to the flow velocity node included angles respectively; and
calculating a flow velocity vector and a flow direction of the flow velocity nodes based on the north-south water-surface flow velocity component and the east-west water-surface flow velocity component.

7. The method for monitoring a flow velocity and a flow direction of a tidal flat coastal current based on photovoltaic video images of a tidal flat according to claim 6, **characterized in that** the space-time images comprise a north-south space-time image and an east-west space-time image; and the extracting gray values on the observation lines based on the tidal flat seawater images, and arranging the gray values of the observation lines in time sequence, to form space-time images comprise:
stacking north-south observation lines extracted in time sequence from each of the tidal flat seawater images to form a two-dimensional north-south gray matrix, and converting the two-dimensional north-south gray matrix into the north-south space-time image; and
stacking east-west observation lines extracted in time sequence from each of the tidal flat seawater images to form a two-dimensional east-west gray matrix, and converting the two-dimensional east-west gray matrix into the east-west space-time image.

8. The method for monitoring a flow velocity and a flow direction of a tidal flat coastal current based on photovoltaic video images of a tidal flat according to claim 6, **characterized in that** the flow velocity node included angles comprise an included angle between a principal direction of a texture of the north-south space-time image and the vertical direction, and an included angle between a principal direction of a texture of the east-west space-time image and the vertical direction; and the calculating a north-south water-surface flow velocity component and an east-west water-surface flow velocity component according to the flow velocity node included angles respectively comprises:
calculating the north-south water-surface flow velocity component of the flow velocity nodes according to the included angle *θᵤ* between the principal direction of the texture of the north-south space-time image and the vertical direction; and
calculating the east-west water-surface flow velocity component of the flow velocity nodes according to the included angle *θᵥ* between the principal direction of the texture of the east-west space-time image and the vertical direction, wherein
a formula for calculating the north-south water-surface flow velocity component of the flow velocity nodes is: ${u}_{i} = \frac{{D}_{u}}{Δt ⋅ cos \left({θ}_{u}\right)}$
wherein *uᵢ* indicates the north-south water-surface flow velocity component of the flow velocity nodes, *Dᵤ* indicates a displacement of a north-south banded texture, Δ*t* indicates a time interval, and *θᵤ* indicates an angle between the north-south banded texture and the vertical direction; and
a formula for calculating the east-west water-surface flow velocity component of the flow velocity nodes is: ${v}_{i} = \frac{{D}_{v}}{Δt ⋅ cos \left({θ}_{v}\right)}$
wherein *vᵢ* indicates the east-west water-surface flow velocity component of the flow velocity nodes, *Dᵥ* indicates a displacement of an east-west banded texture, Δ*t* indicates a time interval, and *θᵥ* indicates an angle between the east-west banded texture and the vertical direction.

9. The method for monitoring a flow velocity and a flow direction of a tidal flat coastal current based on photovoltaic video images of a tidal flat according to claim 6, **characterized in that**
a formula for calculating the flow velocity vector and the flow direction of the flow velocity nodes is: ${V}_{i , j} = \sqrt{{u}_{i}^{2} + {ν}_{j}^{2}}$ ${α}_{i , j} = {tan}^{- 1} \left(\frac{{u}_{i}}{{ν}_{j}}\right)$
wherein *V*_{*i*,*j*} indicates the flow velocity vectors of the flow velocity nodes, *α*_{*i*,}*ⱼ* indicates the flow direction of the flow velocity nodes, *uᵢ* indicates the north-south water-surface flow velocity component of the velocity nodes, and *vⱼ* indicates the east-west water-surface flow velocity component of flow velocity nodes.

10. A system for monitoring a flow velocity and a flow direction of a tidal flat coastal current based on photovoltaic video images of a tidal flat, the photovoltaic video images of a tidal flat are captured using a camera mounted on an existing infrastructure of a photovoltaic support, **characterized by** comprising:
an obtainment module configured to obtain a tidal flat video of a target area to be monitored;
a scene recognition module configured to perform scene recognition based on the tidal flat video to obtain tidal flat seawater images;
an observation line setting module configured to determine a number of observation lines based on the tidal flat seawater images, and set a plurality of parallel flow velocity observation lines in a north-south direction and an east-west direction according to the number of the observation lines, respectively, wherein the parallel flow velocity observation lines comprise north-south parallel flow velocity observation lines and east-west parallel flow velocity observation lines;
an intersection module configured to make the north-south parallel flow velocity observation lines intersect with the east-west parallel flow velocity observation lines to obtain flow velocity nodes; and
a monitoring module configured to obtain the flow velocity and the flow direction of the tidal flat coastal current based on a north-south component and an east-west component of the flow velocity nodes.
